# EUROPEAN PATENT SPECIFICATION

(11) **EP 1 309 026 B1**
(45) Date of publication and mention of the grant of the patent: **03.10.2012**
(21) Application number: 01125843.1
(22) Date of filing: 30.10.2001
(51) Int. Cl.: H02K 11/00, H01M 8/24

(54) **Integrated fuel cell drive unit**
Integrierte Brennstoffzellen-Antriebseinheit
Pile à combustible et unité d'entrainement intégrées

(43) Date of publication of application: 07.05.2003
(73) Proprietor: NuCellSys GmbH, 73230 Kirchheim/Teck-Nabern (DE)
(72) Inventor: Greenhill, Craig, Dr., V7E 5R2 Richmond, BC (CA); Hornburg, Gerald, 73271 Holzmaden (DE); Mirsch, Dietmar, 73230 Kirchheim-Nabern (DE); Mufford, Edward, V2Z 1Z5 Langley, BC (CA); Mulvenna, Alan, North Vancouver, BC V7N 2S2 (CA)
(74) Representative: JENSEN & SON

(56) References cited:
- WO-A-96/20509
- GB-A- 2 253 379
- US-A- 5 717 303

## Description

The invention relates to an integrated drive unit in accordance with the preamble of the independent claim.

WO 96/20509 discloses a manifold assembly for an array of fuel cell stacks for introducing and conducting the inlet reactant and coolant streams to an array of fuel cell stacks and/or for receiving and conducting the outlet reactant and coolant streams from the array of fuel cell stacks.

US 5 923 106 or US 6 005 322 disclose an integrated drive unit comprising a fuel cell power source rigidly coupled to an electric machine where the drive unit exhibits an electric and a mechanical power output and fluid connections for conducting a fluid stream to and from the fuel cell power source.

The object of the invention is to provide a configuration of a fuel cell drive unit that is easily and practically assembled and installed.

This object is achieved in the case of an integrated drive unit having the features of Claim 1.

Fuel cell drive units are usually configured as comprising several individual components, e. g. an array of fuel cell stacks, an electric machine, an inverter etc., which are mounted individually and require interconnecting pipes and wiring.

The invention comprises a drive unit for a fuel cell system where the drive unit is a single physical entity. The drive unit is functional and physically compact. With such a drive unit configuration, assembly and installation of the drive unit becomes handy, straightforward and efficient. The number of necessary installation steps is reduced and few interconnecting wires, mounting brackets, pipes, tubes, hoses, and fittings are required. The drive unit can be used in many applications and is easily tested, shipped and installed by customers.

Further advantages and refinements of the invention emerge from the rest of the claims and the description.

The invention is explained in more detail below with reference to a drawing, in which:
- Figure 1: shows a preferred embodiment of an integrated drive unit according to the invention with side mounted fuel cell stacks.
- Figure 2: shows a preferred embodiment of a fuel cell power source to electric machine connection according to the invention.
- Figure 3: shows a preferred embodiment of a manifold assembly according to the invention.

The invention can be advantageously used in vehicles where a fuel cell power source supplies electric energy but is not restricted to automotive applications.

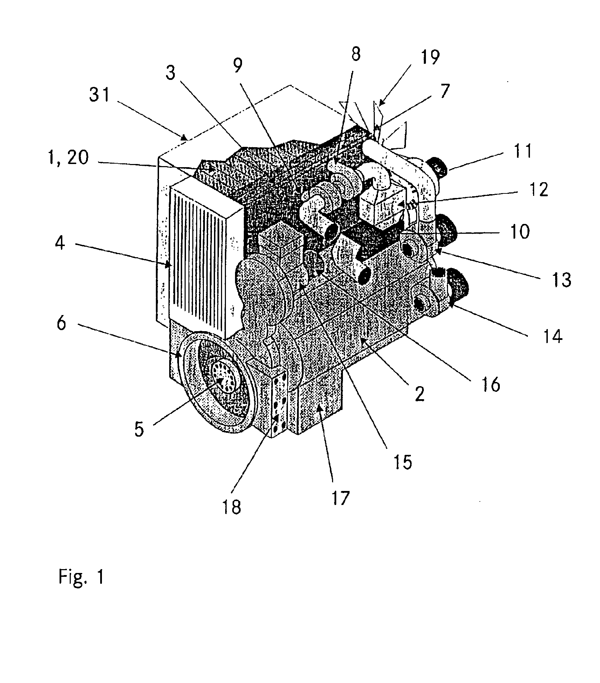

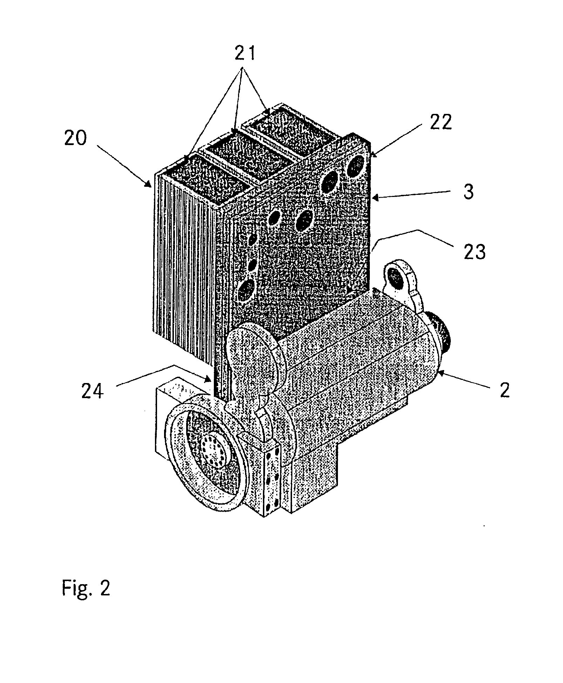

Fig. 1 displays an embodiment of an integrated drive unit according to the invention. Fig. 2 shows the corresponding fuel cell power source to electric machine connection in detail. If a particular item is displayed in Fig. 1 and in Fig. 2, then it is indicated with the same reference numbers.

The integrated drive unit comprises a fuel cell power source 1 which is rigidly coupled to an electric machine 2. The drive unit exhibits an electric and/or a mechanical power output and fluid connections for conducting a fluid stream to and from the fuel cell power source. The fuel cell power source 1 comprises an array of fuel cell stacks 20 where single fuel cells are stacked together. The fuel cell stacks are usually enclosed by a fuel cell stack cover 31. The fuel cell power source 1 preferably contains fuel cell voltage monitors 21 to detect possible failures that might occur within the individual cells of the array of fuel cell stacks 20. The fuel cell power source 1 can be rigidly connected to the electric machine 2 by a manifold assembly 3.

The manifold assembly 3 provides the required physical mounting structure to connect the fuel cell power source 1 to the electric machine 2. The electric machine is preferably provided with a suitable mounting face to mate the manifold assembly 3. Furthermore, the manifold assembly 3 provides the fluid connections to and from the fuel cell power system 1. Hence, the manifold assembly 3 assumes the function of a multitude of mounting brackets, pipes, tubes, hoses and fittings and less parts are required. This may lead to reduced weight of the drive unit. Furthermore, ease of assembly is assured as the plumbing logic is given by the manifold assembly 3.

The fluid connections comprise ports 22, 24 for air, fuel and/or coolant for feeding the fuel cell power source 1. Furthermore, the fluid connections comprise non-depicted ports for fuel cell exhaust. The manifold assembly 3 is preferably attached to the side and to the face, i. e. the minor and the major surface planes, of the electric machine by means of bolts 7, 23. The manifold assembly 3 can also assist non-depicted electrical connections between the fuel cell power source 1, the electric machine 2 and an inverter 4. The inverter 4 is preferably mounted on the physical structure of the manifold assembly 3. The placement of the electric machine 2, the fuel cell power source 1 and the inverter 4 on the same structure, i. e. the manifold assembly, advantageously allows short electrical connections.

Additional typical fuel cell auxiliaries as e. g. a turbocharger 8, a turbocharger expander 9, a supercharger 10, an intercooler 12, a non-depicted air bypass control valve, a non-depicted air exhaust condenser, a non-depicted air exhaust water separator, a non-depicted hydrogen re-circulation jet pump or blower, a non-depicted hydrogen system water separator can also be mounted on the manifold assembly 3. Usually, the turbocharger 8 delivers air directly to the manifold assembly 3 and the turbocharger expander 9 receives air directly from the manifold assembly 3.

The mechanical output of the drive unit provides mechanical power to a shaft 5. In particularly, the shaft 5 is driven by the electric machine 2, usually by its not explicitly depicted gear drives. The drive unit preferably contains an adapter flange 6 to a non-depicted transmission and the mechanical output of the drive unit can be connected to the transmission by the adapter flange to provide traction e. g. for a vehicle. The transmission can be an automatic or a manual transmission.

The drive unit can also drive typical auxiliaries such as a usually gear driven supercharger 10, alternators 11, power steering pumps 16, usually gear driven air brake compressors 15, non-depicted air conditioning compressors, coolant pumps 13, 14, non-depicted lubrication pumps, radiator fans 19 and so on. The auxiliaries are preferably located in the immediate vicinity of the drive unit. The Alternators 11 and the radiator fans 19 are advantageously mounted on the manifold assembly 3 whereas the supercharger 10, power steering pumps 16, air brake compressors 15, non-depicted air conditioning compressors, coolant pumps 13, 14, non-depicted lubrication pumps are preferably mounted on the frame of the electric machine 2. The frame of the electric machine 2 and its typically associated non-depicted gear drives provide a strong and rigid structural base for the manifold assembly 3 and the fuel cell power source 1. The frame of the electric machine 2 is preferably a metal frame.

The drive unit usually also comprises an oil sump 17 attached to the electric machine 2. Mounting pads 18 and other similar features can be cast into the metal frame of the electric machine 2 to allow the drive unit to be easily mounted, for example, in a vehicle chassis in the same manner as existing internal combustion engines.

As the various components, e. g. the fuel cell power source 1, electric machine 2, inverter 4 and so on, and auxiliaries are always installed in the same relative locations drive unit configuration control and drive unit fluid management is simplified.

In a preferred example, the electric machine 2 and the fuel cell power source 1 are mounted onto the major surfaces on opposite sides of the manifold assembly 3. The manifold assembly 3 is preferably mounted vertically on one side or the other of the electric machine 2.

In another example, the manifold assembly 3 is mounted horizontally on top of the electric machine 2. In this configuration the fuel cell power source 1 and the array of fuel cell stacks 20 are easily accessible on the top of the electric machine 2, and the weight of the array of fuel cell stacks 20 is efficiently transferred to the electric machine frame.

In another example, the manifold assembly 3 is mounted at an angle other than vertically or horizontally. Such a configuration can be required for special packaging configurations, or to provide the desired fluid flow and drainage characteristics in the array of fuel cell stacks 20 and/or in the manifold assembly 3.

In another example, the manifold assembly 3 is mounted to the electric machine 2 in such a way that the pivot axis of the electric machine 2 is perpendicular to a major surface plane of the manifold assembly 3 so that the shaft 5 is at one end of the electric machine 2 and the manifold assembly 3 is attached to the opposite end of the electric machine 2.

In another example, more than one manifold assembly 3 is mounted to the electric machine 2, for example on each side. Multiple manifold assemblies 3 require more interconnection piping but may be desirable to allow particular physical arrangements.

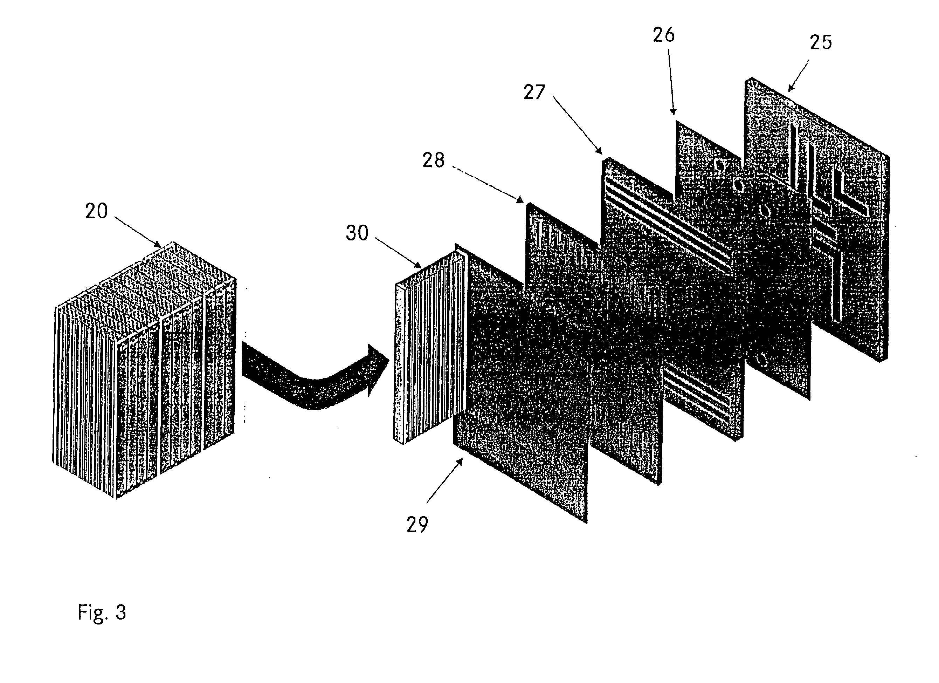

Fig. 3 shows the construction details of a preferred embodiment of the manifold assembly 3 according to the invention. Individual stacks 30 of the array of fuel cell stacks 20 of the fuel cell power source 1 are preferably bolted to the face, i. e. the major surface plane, of the manifold assembly 3. The manifold assembly 3 advantageously consists of multiple layers. In particular, such a multiple layer manifold assembly 3 can comprise a manifold layer with passages to direct fluids to desired external port locations 25, a manifold layer with connecting holes 26, a manifold layer with manifold headers to distribute and collect air, fuel and/or coolant 27, a manifold layer to connect fuel cell stack ports to manifold headers 28 and/or a manifold layer face 29. The individual stacks 30 can then be bolted to the manifold face layer 29.

The manifold assembly 3 is advantageously formed from an electrically and thermally insulating material. Furthermore, it is preferably enclosed by non-depicted means of covers and/or a housings. If the manifold assembly 3 is enclosed by means of covers and housings, the electrical connections can be made inside the cover and/or housing, protecting the electrical connections from the external environment.

Manifold assemblies 3 can be machined for prototypes of short run production, and injection molded or cast for mass production.

The integrated drive unit can be used in automotive or stationary applications. It can be used e. g. to power , vehicles, electrical generators, pumps, compressors, fans, drills, excavation and mining equipment, cranes and tractors, forklifts, gardening equipment and so on.

## Claims

1. An integrated drive unit comprising a fuel cell power source (1) rigidly coupled to an electric machine (2) where the drive unit exhibits an electric and/or a mechanical power output (5, 6) and fluid connections for conducting a fluid stream to and from the fuel cell power source, **characterized in that** the drive unit further comprises a manifold assembly (3) featuring said fluid connections.

2. A drive unit according to Claim 1
where the manifold assembly connects the fuel cell power source (3) to the electric machine (2).

3. A drive unit according to Claim 1
where the fluid connections comprise ports (22) for air, fuel and/or coolant for feeding the fuel cell power source (1).

4. A drive unit according to Claim 1
where the fluid connections further comprise ports for fuel cell exhaust.

5. A drive unit according to Claim 1
where the manifold assembly (3) assists electrical connections between the fuel cell power source (1), the electric machine (2) and an inverter (4).

6. A drive unit according to Claim 1
where an inverter (4) is mounted on the physical structure of the manifold assembly (3).

7. A drive unit according to Claim 1
where the mechanical output of the drive unit provides mechanical power to a shaft (5).

8. A drive unit according to Claim 1
where the mechanical output of the drive unit is connected to a transmission.

9. A drive unit according to Claim 2
where the electric machine (2) and the fuel cell power source (1) are mounted onto the major surfaces on opposite sides of the manifold assembly (3).

10. A drive unit according to Claim 1
where the manifold assembly (3) exhibits a physical structure suited to connect an array of fuel cell stacks (20) of the fuel cell power source (1), with single fuel cells (30) stacked together, to an electric machine (2).

11. A drive unit according to Claim 1
where the manifold assembly (3) is formed from an electrically and thermally insulating material.

12. A drive unit according to Claim 1
where the manifold assembly (3) consists of multiple layers comprising a manifold layer with passages to direct fluids to desired port locations (25), a manifold layer with connecting holes (26), a manifold layer with manifold headers to distribute and collect air, fuel and/or coolant (27), a manifold layer to connect fuel cell stack ports to manifold headers (28) and/or a manifold layer face (29).

13. A drive unit according to Claim 1
where the manifold assembly (3) is enclosed by means of covers and/or a housings.

## Patentansprüche

1. Integrierte Antriebseinheit mit einer fest an eine Elektromaschine (2) gekoppelten Brennstoffzellen-Energiequelle (1), wobei die Antriebseinheit einen elektrischen und/oder mechanischen Leistungsabtrieb (5, 6) sowie Fluidverbindungen zum Leiten eines Fluidstroms zu der Brennstoffzellen-Energiequelle sowie von dieser weg aufweist,
**dadurch gekennzeichnet, dass** die Antriebseinheit weiter eine die besagten Fluidverbindungen aufweisende Verteiler-Baugruppe (3) umfasst.

2. Antriebseinheit nach Anspruch 1,
wobei die Verteiler-Baugruppe die Brennstoffzellen-Energiequelle (1) mit der Elektromaschine (2) verbindet.

3. Antriebseinheit nach Anspruch 1,
wobei die Fluidverbindungen Anschlüsse (22) für Luft, Brennstoff und/oder Kühlmittel zur Versorgung der Brennstoffzellen-Energiequelle (1) aufweisen.

4. Antriebseinheit nach Anspruch 1,
wobei die Fluidverbindungen weiter Anschlüsse für Brennstoffzellen-Abgase aufweisen.

5. Antriebseinheit nach Anspruch 1,
wobei die Verteiler-Baugruppe (3) elektrische Verbindungen zwischen der Brennstoffzellen-Energiequelle (1), der Elektromaschine (2) und einem Wechselrichter (4) unterstützt.

6. Antriebseinheit nach Anspruch 1,
wobei ein Wechselrichter (4) am körperlichen Aufbau der Verteiler-Baugruppe (3) montiert ist.

7. Antriebseinheit nach Anspruch 1,
wobei der mechanische Abtrieb der Antriebseinheit eine Welle (5) mit mechanischer Leistung versorgt.

8. Antriebseinheit nach Anspruch 1,
wobei der mechanische Abtrieb der Antriebseinheit an ein Getriebe angeschlossen ist.

9. Antriebseinheit nach Anspruch 2,
wobei die Elektromaschine (2) und die Brennstoffzellen-Energiequelle (1) an den größeren Flächen auf einander gegenüber liegenden Seiten der Verteiler-Baugruppe (3) montiert sind.

10. Antriebseinheit nach Anspruch 1,
wobei die Verteiler-Baugruppe (3) einen körperlichen Aufbau aufweist, der zum Anschluss einer Gruppe von Brennstoffzellenstapeln (20) der Brennstoffzellen-Energiequelle (1) an eine Elektromaschine (2) ausgelegt ist, wobei einzelne Brennstoffzellen (30) zusammengestapelt sind.

11. Antriebseinheit nach Anspruch 1,
wobei die Verteiler-Baugruppe (3) aus einem Elektro- und Wärmeisolierstoff gebildet ist.

12. Antriebseinheit nach Anspruch 1,
wobei die Verteiler-Baugruppe (3) aus mehreren Lagen besteht, die eine Verteilerlage (25) mit Kanälen zum Leiten eines Fluids zu den gewünschten Anschlussstellen, eine Verteilerlage (26) mit Anschlussbohrungen, eine Verteilerlage (27) mit Hauptrohren zum Verteilen und Sammeln von Luft, Brennstoff und/oder Kühlmittel, eine Verteilerlage (28) zum Verbinden der Anschlüsse des Brennstoffzellenstapels mit den Hauptrohren des Verteilers und/oder eine Verteilerlagen-Stirnfläche (29) umfasst.

13. Antriebseinheit nach Anspruch 1,
wobei die Verteiler-Baugruppe (3) von Abdeckungen und/oder einem Gehäuse umschlossen ist.

## Revendications

1. Unité d'entraînement intégrée comprenant une source d'alimentation (1) à pile à combustible couplée de manière rigide à une machine électrique (2) où l'unité d'entraînement présente une sortie d'alimentation (5, 6) mécanique et / ou électrique et des connexions fluidique pour acheminer un flux de fluide depuis et vers la source d'alimentation à pile à combustible, **caractérisée en ce que** l'unité d'entraînement comprend en outre un ensemble collecteur (3) avec les dites connexions fluidiques.

2. Unité d'entraînement selon la revendication 1, **caractérisée en ce que** l'ensemble collecteur connecte la source d'alimentation (3) à pile à combustible à la machine électrique (2).

3. Unité d'entraînement selon la revendication 1, **caractérisée en ce que** les connexions fluidiques comprennent des orifices (22) pour l'air, le combustible et /ou le liquide de refroidissement pour alimenter la source d'alimentation (1) à pile à combustible.

4. Unité d'entraînement selon la revendication 1, dans laquelle les connexions fluidiques comprennent en outre des orifices pour l'évacuation de pile à combustible.

5. Unité d'entraînement selon la revendication 1, **caractérisée en ce que** l'ensemble collecteur (3) aide les connexions électriques entre la source d'alimentation (1) à pile à combustible, la machine électrique (2) et un inverseur (4).

6. Unité d'entraînement selon la revendication 1, dans laquelle un inverseur (4) est monté sur la structure physique de l'ensemble collecteur (3).

7. Unité d'entraînement selon la revendication 1, **caractérisée en ce que** la sortie mécanique de l'unité d'entraînement fournit une alimentation électrique à un arbre (5).

8. Unité d'entraînement selon la revendication 1, **caractérisée en ce que** la sortie mécanique de l'unité d'entraînement est connectée à une transmission.

9. Unité d'entraînement selon la revendication 2, **caractérisée en ce que** la machine électrique (2) et la source d'alimentation (1) à pile à combustible sont montées sur les surfaces principales de l'ensemble collecteur (3).

10. Unité d'entraînement selon la revendication 1, **caractérisée en ce que** l'ensemble collecteur (3) présente une structure physique pour connecter une rangée d'empilement (20) de piles à combustible de la source d'alimentation (1) à pile à combustible présentant des piles à combustible (30) empilées ensemble, à une machine électrique (2).

11. Unité d'entraînement selon la revendication 1, où l'ensemble collecteur (3) est formé à partir d'un matériau isolant thermiquement et électriquement.

12. Unité d'entraînement selon la revendication 1 dans laquelle l'ensemble collecteur (3) comprend plusieurs couches comprenant une couche collectrice avec des passages pour orienter les fluides vers les emplacements d'orifice souhaités (25), une couche collectrice avec des orifices de connexion (26), une couche collectrice avec des têtes collectrices pour distribuer et collecter l'air, le combustible et / ou le liquide de refroidissement (27), une couche collectrice pour connecter des orifices d'empilement de pile à combustible à des têtes collectrices (28) et / ou une surface de couche collectrice (29).

13. Unité d'entraînement selon la revendication 1, où l'ensemble collecteur (3) est protégé par des couvercles et / ou des boîtiers.
